Europäisches Patentamt

European Patent Office

Office européen des brevets

(11) Veröffentlichungsnummer : **0 088 158**
**B1**

(12) **EUROPÄISCHE PATENTSCHRIFT**

(45) Veröffentlichungstag der Patentschrift :
13.03.85

(21) Anmeldenummer : 82110922.0

(22) Anmeldetag : 26.11.82

(51) Int. Cl.⁴ : **C 01 B 33/28, C 11 D 3/12,
C 11 D 3/16**

(54) Verfahren zur Herstellung von mit Organosilanen oberflächenmodifizierten Zeolithen.

(30) Priorität : 10.03.82 DE 3208598

(43) Veröffentlichungstag der Anmeldung :
14.09.83 Patentblatt 83/37

(45) Bekanntmachung des Hinweises auf die Patenterteilung : 13.03.85 Patentblatt 85/11

(84) Benannte Vertragsstaaten :
DE FR IT

(56) Entgegenhaltungen :
DE-A- 2 721 238
DE-A- 2 843 709
US-A- 4 013 574
US-A- 4 138 363
US-A- 4 243 545

(73) Patentinhaber : **Degussa Aktiengesellschaft
Weissfrauenstrasse 9
D-6000 Frankfurt am Main 1 (DE)**

(72) Erfinder : **Kittelmann, Udo, Dr.
Liebigstrasse 52
D-6074 Roedermarkt (DE)**
Erfinder : **Diehl, Manfred, Dr.
Zeisselstrasse 7
D-6000 Frankfurt am Main 1 (DE)**
Erfinder : **Bergmann, Roland
August-Bebel-Strasse 2d
D-6450 Hanau 11 (DE)**
Erfinder : **Stadtmüller, Günter
Haubühlstrasse 2
D-8755 Alzenau (DE)**

Jouve, 18, rue St-Denis, 75001 Paris, France

**Beschreibung**

Die Erfindung betrifft ein Verfahren zur Herstellung von mit Organosilanen oberflächenmodifizierten Zeolithen.

Es ist bekannt, Phosphate in Waschmitteln mittels des kristallinen Zeoliths des Typs NaA4, der eine definierte Teilchengrößenverteilung aufweist, zu substituieren.

Es zeigt sich jedoch, daß Zeolithe mit kleiner Teilchengröße bei der Herstellung der Waschmittel zum Agglomerieren neigen. Die so entstandenen Agglomerate verschlechtern die Wirksamkeit und lagern sich im ungünstigsten Fall auf der Wäsche ab. Eine Möglichkeit, die Agglomerationsneigung von pulverförmigen Substanzen zu verringern besteht in der Modifizierung der Oberfläche.

Es ist bekannt, wasserfreie Zeolithe mit Silanen bei erhöhten Temperaturen umzusetzen. Dabei handelte es sich jedoch um Y-Zeolithe, die in der ausgetauschten H-Form vorlagen. Sie wurden bei Temperaturen zwischen 250 und 650 °C mit Tetramethylsilan umgesetzt und anschließend ihre Wirksamkeit als Katalysatoren getestet. (Mc Ateer, J. J. Rooney « Proceedings of the 3$^{rd}$ Int. Conference on Molecular Sieves », J. B. Unterhoeven, Editor, Zürich, 3-7 September 1973, S. 258-265).

Weiterhin ist bekannt, Zeolithe in der Na-Form mit Organosilanen zu behandeln (US-A-4 138 363, DE-A-28 43 709, US-A-4 243 545) und auf diesem Wege die Agglomerationsneigung zu verringern. Dabei wird das Calciumbindevermögen der Zeolithe nur unwesentlich beeinflußt, das für den Einsatz in Waschmitteln von Bedeutung ist.

Bedingung für die Einsetzbarkeit der Silane nach diesen Verfahren ist aber, daß sie nach der Umsetzung der Alkoxygruppen mit dem Zeolith noch eine weitere reaktive Gruppe wie z. B. Acryl-, Epoxy- oder Aminogruppen besitzen.

Erst die Anwesenheit dieser Gruppen bewirkt die oben angeführten Eigenschaftsverbesserungen der oberflächenmodifizierten Zeolithe.

Die Herstellung derartiger Silane ist aber mit einem großen Aufwand verbunden, der sie entsprechend kostspielig werden läßt.

Die nach der Umsetzung mit der Zeolithoberfläche noch verbleibenden reaktiven Gruppen der Silane führen außerdem dazu, daß die modifizierten Zeolithe nicht mit allen oberflächenaktiven Mitteln verträglich sind, die üblicherweise in Waschmitteln Verwendung finden.

Aufgabe der Erfindung ist es, einen mit Silanen oberflächenmodifizierten Zeolith herzustellen, der diese Nachteile vermeiden läßt.

Gegenstand der Erfindung ist ein Verfahren zur Herstellung von mit Organosilanen oberflächenmodifizierten, in der Na-Form vorliegenden, kristallinen Zeolithen, das dadurch gekennzeichnet ist, daß die Zeolithe mit 0,02-5 Gew.-%, bezogen auf die Menge des eingesetzten Zeolithen, eines Organosilans aus der Gruppe n-Propyltriäthoxysilan und Dimethyldiäthoxysilan umgesetzt werden, wobei das Organosilan gegebenenfalls in einem organischen Lösungsmittel gelöst eingesetzt wird.

In einer bevorzugten Ausführungsform wird als Ausgangsmaterial ein Zeolith des Typs A eingesetzt, der gemäß den deutschen Offenlegungsschriffen DE-A-24 47 021, DE-A-25 17 218, DE-A-26 51 419, DE-A-26 51 420, DE-A-26 51 436, DE-A-26 51 437, DE-A-26 51 445 und/oder DE-A-26 51 485 hergestellt wurde und die dort aufgeführte Teilchengrößenverteilung aufweist.

Vorzugsweise wird ein Zeolithpulver des Typs A gemäß DE-A-26 51 485 verwendet.

Der Wassergehalt des Zeolithen kann 0-25 %, bevorzugt 15 bis 25 % betragen.

Zur Herstellung des erfindungsgemäßen Produkts kann das Organosilan auf den in einem verschließbaren gefäß vorgelegten Zeolith aufgetropft bzw. aufgesprüht werden. Die Menge des Organosilans beläuft sich auf 0,02-5 Gew.-%, bezogen auf die Menge des eingesetzten Zeolithen.

Bevorzugt werden 0,02-2 Gew.-% angewendet.

Dieselben Mengen an Organosilan können aber auch in einem organischen Lösungsmittel gelöst mit dem Zeolith vermischt werden. Vorzugsweise liegt die Konzentration des Silans im Lösungsmittel zwischen 0,5 und 1 Gew.-%. Als Lösungsmittel sind insbesondere geeignet, inerte, apolare, gesättigte aliphatische und ungesättigte cyclische Kohlenwasserstoffe. Vorteilhaft sind auch aliphatische Alkohole verwendbar. Zweck der Verdünnung der Silane durch Lösungsmittel ist deren gleichmäßige Verteilung auf der Zeolithoberfläche während des Aufsprühens oder Auftropfens. Das Lösungsmittel wird dann nach der erfolgten Umsetzung des Silans abgezogen, wenn es nicht während des Umsetzungsschrittes, der bei erhöhter Temperatur erfolgt, schon verdampft ist.

Die Gesamtkonzentration des Silans im Lösungsmittel entspricht den oben angegebenen 0,02-5 Gew.-%, bezogen auf die Menge des umzusetzenden Zeoliths.

Das Reaktionsgemisch aus Zeolith/Silan bzw. Silan/Lösungsmittel wird bei Temperaturen zwischen 30 °C und 150 °C, bevorzugt 80 und 150 °C, solange untensiv gemischt, bis eine vollständige Umsetzung des Silans stattgefunden hat.

In einer bevorzugten Ausführungsform kann das Organosilan einer wässrigen Suspension zugesetzt werden, die einen Gehalt zwischen 20 und 60 Gew.-%, bevorzugt 43 und 51 Gew.-% Zeolith aufweist. Dabei wirkt ein in derartigen Suspensionen enthaltenes Stabilisierungsmittel nicht störend. Anschließend wird die Suspension sprühgetrocknet. Man erhält dann ebenfalls ein Pulver, dessen Fließfähigkeit und Agglomerationsverhalten verbessert sind im Vergleich mit dem Ausgangszeolith. Das bedeutet, daß in diesem Fall die Oberflächenmodifizierung bei der Erhitzung im Sprühturm stattgefunden hat.

Die reaktiven Alkoxygruppen reagieren mit dem Zeolith, so daß nach der Reaktion nur noch inerte Kohlenwasserstoffreste an das Siliciumatom gebunden sind. Aus diesem Grund ist später keine Umsetzung dieser Gruppen mit den sonstigen in den Waschmitteln eingesetzten oberflächenaktiven Substanzen zu befürchten.

Der erhaltene erfindungsgemäß modifizierte Zeolith zeigt überraschenderweise eine deutliche Verbesserung der Fließfähigkeit und zeigt eine deutlich geringere Neigung zur Agglomeration als das Ausgangsmaterial, obwohl die umgesetzten Silane keine reaktiven Gruppen mehr aufweisen.

Das Calciumbindevermögen, dem eine entscheidende Bedeutung bei der Beurteilung der Einsetzbarkeit der Zeolithe zukommt, sinkt nur unwesentlich.

Ebenso wird die Schüttdichte des pulverfömigen Zeoliths durch die Modifizierung der Oberfläche mit den Organosilanen nur geringfügig abgesenkt.

Zur Verdeutlichung der Erfindung sind im folgenden eine reihe von Beispielen aufgeführt.

Als maß für die Fließfähigkeit bzw. das Agglomerationsverhalten wurde die Schüttkegelhöhe gewählt.

Je höher dieser Wert ist, desto weniger fließfähig ist das untersuchte Pulver.

Als Zeolith wurde in allen Fällen ein Zeolith des Typs A (HAB A40) eingesetzt, der gemäß DE-A-26 57 485 hergestellt wurde.

Es werden die folgenden 5 Methoden zur Aufgringung des Silans angewandt. Die Prozentangaben bedeuten Gew.% pro 100 Teile Mischung Zeolith/Silan.

1. HAB A 40 wird in einem Erlenmayerkolben vorgelegt, mit 0,5 %, 0,1 %, 0,05 % und 0,02 % Propyltriäthoxisilan versetzt und manuell gut vermischt.

2. Wie unter 1, nur werden 5 % Dimethyldiäthoxysilan eingesetzt.

3. HAB A 40 wird in einem telschig-Freifallmischer vorgelegt und 1 %, 0,5 %, 0,1 %, 0,05 % Propyltriäthoxilan aufgesprüht.

4. HAB A 40 wird in 200 ml eines inerten Lösungsmittels mit 1 % Propyltriäthoxisilan versetzt und 2 h am Rückfluß gekocht.

Die Proben werden 4 h bei 150 °C zur Reaktion gebracht und anschließend das Calciumbindevermögen sowie die Schüttkegelhöhe als Maß für das Fließverhalten bestimmt (siehe Tabelle).

5. HAB A 40 wird als Suspension in Wasser vorgelegt, in die dann 2 % und 0,05 % Propyltriäthoxysilan eingerührt werden. Daran schließt die Sprühtrocknung an.

| | | Calciumbindevermögen (mg CaO/g HAB) | Schüttkegelhöhe (cm) |
|---|---|---|---|
| | HAB A 40 unbehandelt | 160 | 9,2 |
| 1. | HAB A 40 + 0,5 % Silan I | 126,2 | 2,5 |
| | HAB A 40 + 0,1 % Silan I | 129,0 | 6,5 |
| | HAB A 40 + 0,05 % Silan I | 145,8 | 7,5 |
| | HAB A 40 + 0,02 % Silan I | 162,6 | 7,2 |
| 2. | HAB A 40 + 5,0 % Silan II | 137,9 | 7,7 |
| 3. | HAB A 40 + 1 % Silan I (Telschig-Mischer) | 126,2 | 4,6 |

(Fortsetzung)

| | Calciumbinde-vermögen (mg CaO/g HAB) | Schüttkegel-höhe (cm) |
|---|---|---|
| HAB A 40 + 0,5 % Silan I (Telschig-Mischer) | 134,6 | 6,8 |
| HAB A 40 + 0,1 % Silan I (Telschig-Mischer) | 140,2 | 9,2 |
| HAB A 40 + 0,05 % Silan I (Telschig-Mischer) | 140,2 | 10,6 |
| 4. HAB A 40 + 1,0 % Silan I (inertes Lö-sungsmittel) | 134,6 | 6,5 |

Silan I  = Propyltriäthoxysilan
Silan II = Dimethyldiäthoxysilan

5.1
Sprühversuch 2 % Silan                                                              20 kg Ansatz
Ansatz
35,4 kg  44 %iger Batch    0,4 kg Silan + 4 kg $H_2O$
Feststoffgehalt :                                                                    39,2 %
T° Abluft :                                                                          120 °C
T° Brenner :                                                                         490 °C
Druck :                                                                              2 bar
Schüttkegelhöhe :                                                                    7,2 cm
Schüttdichte :                                                                       370 g/l
Schüttdichte HAB A 40 : (unbehandelt)                                                380 g/l
Calciumbindevermögen :                                                               148,62 mg CaO

5.2
Sprühversuch 0,5 % Silan                                                            20 kg Ansatz
Ansatz
45,5 kg  44 %iger Batch  0,1 kg Silan, 4 kg $H_2O$
Feststoffgehalt :                                                                    40,4 %
T° Abluft :                                                                          116 °C
T° Brenner :                                                                         490 °C
Druck :                                                                              2 bar
Schüttkegelhöbe :                                                                    7,1 cm
Schüttdichte :                                                                       380 g/l
Calciumbindevermögen :                                                               154,2 mg CaO

Die Versuche haben gezeigt, daß eine Verbesserung der Fließfähigkeit und des Agglomerationsverhaltens durch Zugabe von 2 % und 0,5 % Silan nach dieser Methode im Sprühturm erreichbar ist.

**Ansprüche**

1. Verfahren zur Herstellung mit von Organosilanen oberflächenmodifizierten in der Na-Form vorliegenden, kristallinen Zeolithen, dadurch gekennzeichnet, daß Zeolithe mit 0,02-5 Gew.-%, bezogen auf die Menge des eingesetzten Zeolithen, eines organosilans ans der Gruppe n-Propyltriäthoxysilan und

4

Dimethyldiäthoxysilanumsetzt, wobei man das Organosilan gegebenenfalls in einem organischen Lösungsmittel gelöst einsetzt.

2. Verfahren nach Anspruch 1, dadurch gekennzeichnet, daß man als Zeolith einen Zeolithen des types A einsetzt.

3. Verfahren nach Anspruch 2, dadurch gekennzeichnet, daß man das organosilan einer Suspension des Zeolithen im Wasser zusetzt, die einen Feststoffgehalt von 20 bis 60 Gew.-% aufweist, un diese Mischung sprühtrocknet.

4. Verwendung von Zeolithen, hergestellt nach dem Verfahren gemäß den Ansprüchen 1 bis 3 in Waschund Reinigungsmitteln.

**Claims**

1. A process for the production of crystalline zeolites which are present in the Na-form and are surface-modified by organosilanes, characterised in that zeolites are reacted with from 0.02 to 5 % by weight, based on the quantity of zeolite used, of an organosilane of the group n-propyltriethoxysilane and dimethyldiethoxysilane, the organosilane optionally being used dissolved in an organic solvent.

2. A process according to claim 1, characterised in that a zeolite of type A is used as zeolite.

3. A process according to claim 2, characterised in that the organosilane is added to a suspension of the zeolite in water, which has a solids content of from 20 to 60 % by weight, and this mixture is spray dried.

4. The use of zeolites, produced by the process according to claims 1 to 3, in detergents and cleansing agents.

**Revendications**

1. Procédé pour la préparation de zéolithes cristallines, se trouvant sous la forme Na, modifiées superficiellement des organosilanes, procédé caractérisé en ce que l'on fait réagir la zéolithe avec 0,02 à 5 % en poids, calculé sur la qualité de zéolithe mise en oeuvre, d'un organosilane choisi parmi les n-propyltriéthoxysilane et diméthyldiéthoxysilane, l'organosilane pouvant être éventuellement utilisé en solution dans un solvant organique.

2. Procédé selon la revendication 1, caractérisé en ce que comme zéolithe on utilise une zéolithe du type A.

3. Procédé selon la revendication 2, caractérisé en ce que l'organosilane est ajouté à une suspension de zéolithe dans l'eau, présentant une teneur en matière solide de 20 à 60 % en poids, et que ce mélange est séché par atomisage.

4. Utilisation des zéolithes, préparées par les procédés selon les revendications 1 à 3, dans les lessives et produits de nettoyage.